# EUROPÄISCHE PATENTANMELDUNG

(11) **EP 2 087 788 A1**
(43) Veröffentlichungstag der Anmeldung: **12.08.2009**
(21) Anmeldenummer: 08151125.5
(22) Anmeldetag: 06.02.2008
(51) Int. Cl.: A01K 5/02

(54) **Automatisches Fütterungssystem insbesondere für Pferde**

(71) Anmelder: Noesen, Roland, 7395 Hunsdorf (LU)
(72) Erfinder: Noesen, Roland, 7395 Hunsdorf (LU)
(74) Vertreter: Office Freylinger

(57) **Zusammenfassung**

Ein automatisches Fütterungssystem (10) für Nutztiere, insbesondere für Pferde, umfasst eine Raufutter-Dosiervorrichtung (12) mit einem Raufutterbehälter (16). Der Raufutterbehälter weist eine Fressöffnung (20) sowie einen Schieber (24) zum öffnen bzw. schließen der Fressöffnung auf. Ferner umfasst das System eine Kraftfutter-Dosiervorrichtung (14) mit einem Kraftfutterbehälter (50) und einer Abgabevorrichtung zur dosierten Abgabe von Kraftfutter. Erfindungsgemäß ist ein Betätigungsmittel (34) am Schieber (24) der Raufutter-Dosiervorrichtung (12) vorgesehen, welches zur dosierten Abgabe von Kraftfutter mit der Abgabevorrichtung (36) der Kraftfutter-Dosiervorrichtung (14) mechanisch zusammenwirkt. Das Betätigungsmittel (34) ermöglicht das Verwenden eines Teils der mechanischen Arbeit, welche zum Bewegen des Schiebers (24) verrichtet wird, zur Betätigung der Abgabevorrichtung der Raufutter-Dosiervorrichtung, wodurch letztere vereinfacht, insbesondere passiv ausgebildet werden kann.

## Beschreibung

### Technisches Gebiet

Die vorliegende Erfindung betrifft automatische Fütterungssysteme für Haus- oder Nutztiere, insbesondere für Pferde.

### Hintergrund

Das natürliche Nahrungsaufnahmeverhalten verschiedener Haus- bzw. Nutztiere, speziell der Herbivoren und insbesondere der Equiden, zeichnet sich, neben einer beträchtlichen Nahrungsaufnahmedauer (bis zu 70% der gesamten Tageszeit), besonders durch eine große Häufigkeit der über den Tag verteilten Nahrungsaufnahmen aus. Pferde beispielsweise werden daher als sogenannte "Dauerfresser" bezeichnet. Obwohl das Fütterungssystem gemäss vorliegender Erfindung prinzipiell auch für andere Tierarten geeignet ist, wird nachfolgend zur Vereinfachung nur auf Pferde Bezug genommen.

Bei manueller Fütterung von Pferden in Boxenhaltung beispielsweise, wird üblicherweise nur 2 bis 3 mal am Tag von Hand Futter zugetragen. Die sich hieraus ergebende für Pferde sehr unnatürliche Nahrungsaufnahme kann zu fütterungsbedingten Erkrankungen wie z.B. Koliken führen. Ebenso kann die dauerhafte Verfügbarkeit großer Nahrungsmengen zu fütterungsbedingten Erkrankungen führen, da die Tiere in diesem Fall auch dazu tendieren, exzessive Futtermengen in kurzer Zeit aufzunehmen.

Bei der Fütterung wird zwischen zwei Nahrungstypen unterschieden, dem sogenannten Raufutter und dem sogenannten Kraftfutter. Das Raufutter (i.Allg. Heu, evtl. Stroh oder Silage) enthält insbesondere die benötigten Rohfasern wohingegen das Kraftfutter (Hafer, Gerste, Mais oder Futtermischungen häufig mit Vitaminen und Mineralstoffen versetzt) eine höhere Energiedichte aufweist und, insbesondere bei Leistungsanspruch an das Pferd, weitere notwendige Nährstoffe wie z.B. Proteine liefert.

### Stand der Technik

Um eine möglichst artgerechte und naturnahe Fütterung zu gewährleisten, wurden bereits vor einiger Zeit automatische Fütterungssysteme vorgeschlagen. Bekannte entsprechende Systeme ermöglichen es, vollautomatisiert kleine Futterrationen in hoher Frequenz über den Tag verteilt auszugeben. Dadurch werden, nebst der artgerechteren und gesünderen Fütterung, beträchtliche Einsparungen durch Arbeitszeitreduzierung für den Tierhalter bzw. Stallungsbetreiber erzielt.

Hinsichtlich der beiden obengenannten Nahrungstypen ist bei den Fütterungssystemen zu unterscheiden zwischen Raufutter-Dosiervorrichtungen und Kraftfutter-Dosiervorrichtungen.

Typische Raufutter-Dosiervorrichtungen umfassen einen verhältnismäßig großen, kastenförmigen Behälter mit einer Fressöffnung für das Raufutter. Die Fressöffnung ist üblicherweise mit Fressgittern versehenen und im unteren Bereich angeordnet. Sie wird durch einen Schieber gesteuert geöffnet bzw. geschlossen, um dem Pferd durch Zeitsteuerung selektiv und dosiert den Zugang zum Raufutter zu geben bzw. zu verweigern. Eine derartige Raufuttervorrichtung für die Freilandhaltung ist z.B. in der DE-Gebrauchsmusterschrift Nummer DE 20 2005 006 093 beschrieben. Vergleichbare Vorrichtungen insbesondere für die Boxenhaltung werden in Deutschland beispielsweise von den Firmen SCHAUER MASCHINENFABRIK GmbH aus Pocking und HINRICHS INNOVATION + TECHNIK GmbH aus Weddingstedt angeboten.

Typische Kraftfutter-Dosiervorrichtungen umfassen hingegen einen verhältnismäßig kleinen, meist trichterförmigen Behälter für das Kraftfutter. Am Auslauf ist üblicherweise ein motorbetriebener Schneckenförderer zur gesteuerten Abgabe von körnigem bzw. flockigem Kraftfutter angeordnet. Die Abgabe erfolgt in einen Fresstrog, welcher dem Pferd dauerhaft zugänglich ist. Eine solche Dosiervorrichtung ist z.B. in der DE-Offenlegungschrift Nummer DE 43 21 140 oder der internationalen Patentanmeldung WO 95/10180 beschrieben. Die oben bereits genannten Hersteller SCHAUER und H.I.T. bieten beispielsweise vergleichbare Kraftfutter-Dosiervorrichtungen als Nebenstellgeräte zu den größeren Raufutter-Dosierautomaten an. Weitere Anbieter vergleichbarerer Kraftfutter-Automaten in Deutschland sind z.B. die DALTEC Fütterungstechnische Anlagen GmbH aus Cappeln die LAAKE GmbH aus Langen und die SEIDEL Pferdeeinrichtungen GmbH aus Flöha.

### Aufgabe der Erfindung

Eine Aufgabe der vorliegenden Erfindung ist es, eine vereinfachte Bauweise eines automatischen Fütterungssystems für Raufutter und Kraftfutter vorzuschlagen.

Diese Aufgabe wird gelöst durch ein automatisches Fütterungssystem nach Anspruch 1. Weitere vorteilhafte Ausgestaltungen ergeben sich aus den Unteransprüchen.

### Allgemeine Beschreibung der Erfindung

Es wird ein automatisches Fütterungssystem für Nutztiere, insbesondere für Pferde, vorgeschlagen. Das System umfasst eine Raufutter-Dosiervorrichtung mit einem Raufutterbehälter. Der Raufutterbehälter weist eine Fressöffnung sowie einen Schieber zum öffnen bzw. schließen der Fressöffnung auf. Ferner umfasst das System eine Kraftfutter-Dosiervorrichtung mit einem Kraftfutterbehälter und einer Abgabevorrichtung zur dosierten Abgabe von Kraftfutter. Die Kraftfutter-Dosiervorrichtung ist mit der Raufutter-Dosiervorrichtung kombiniert, so dass Raufutter- und Kraftfutter getrennt aber anhand des gleichen Systems verfüttert werden können. Die Erfindung zeichnet sich dadurch aus, dass ein Betätigungsmittel am Schieber der Raufutter-Dosiervorrichtung vorgesehen ist, welches zur dosierten Abgabe von Kraftfutter mit der Abgabevorrichtung der Kraftfutter-Dosiervorrichtung mechanisch zusammenwirkt. Mit anderen Worten, das Betätigungsmittel ermöglicht das Verwenden eines Teils der mechanischen Arbeit, welche zum Bewegen des Schiebers verrichtet wird, um ein rein mechanisches Betätigen der Abgabevorrichtung an der Kraftfutter-Dosiervorrichtung zu ermöglichen.

Im Vergleich zur herkömmlichen Nebeneinanderstellung von bekannten, jeweils unabhängig angetriebenen Raufutter- und Kraftfutter-Dosierern lassen sich durch die erfindungsgemäße, vereinfachte Bauweise die Herstellungskosten wie auch die Wartungskosten des Systems erheblich reduzieren. Die Erfindung ermöglicht es insbesondere, die Kraftfutter-Dosiervorrichtung passiv bzw. antriebslos, d.h. ohne eigenen Antrieb und insbesondere rein mechanisch betätigbar zu gestalten. Hierdurch lässt sich unter anderem der bisher separat in der Raufutter-Dosiervorrichtung vorgesehene Antrieb einsparen, da der Antrieb des Schiebers auch für die Betätigung der Raufutter-Dosiervorrichtung verwendet wird. Auch die Kraftfutter-Dosiervorrichtung selbst kann hierdurch in verhältnismäßig einfacher Bauart ausgeführt werden, so dass sich insgesamt konstruktive Einsparungen, vereinfachte Wartung und eine geringere Störanfälligkeit ergeben. Die Kraftfutter-Dosiervorrichtung an sich muss somit weder an eine Energieversorgung noch an eine Steuerung angeschlossen werden und wird über die Steuerung der Raufutter-Dosiervorrichtung mitgesteuert.

In einer bevorzugten Ausgestaltung umfasst die Abgabevorrichtung der Kraftfutter-Dosiervorrichtung eine gegen eine Federkraft in den Kraftfutterbehälter verschiebbare Dosierkammer. Die Dosierkammer weist mindestens eine Einlauföffnung im oberen Endbereich sowie mindestens eine Auslauföffnung im unteren Endbereich auf. Das Betätigungsmittel am Schieber kann die Dosierkammer verschieben. und zwar von einem ausgeschobenen Zustand in einen eingeschobenen Zustand. und in Richtung zurück wieder freigeben. Hierbei ist die Dosierkammer im eingeschobenen Zustand durch die Einlauföffnung mit Kraftfutter befüllbar und im ausgeschobenen Zustand einerseits gegenüber dem Kraftfutterbehälter verschlossen und andererseits durch die Auslauföffnung entleerbar, und zwar so dass eine dosierte Menge Kraftfutter abgegeben wird, welche in etwa dem Volumen der Dosierkammer entspricht.

Es sind Flüssigkeitszapfventile ähnlicher Bauart, d.h. mit aufwärts drückbaren Betätigungsteilen zur volumengesteuerten Abgabe von Flüssigkeiten unter Schwerkraft im Schankgewerbe bekannt und bewährt. Die vorliegende Erfindung hat jedoch unter anderem den unbestreitbaren Verdienst, zum ersten Mal eine derartige Vorrichtung für die Dosierung von fließfähigem Kraftfutter in einem automatischen Fütterungssystem für Nutztiere vorzuschlagen.

Zur Anpassung der Kraftfutterdosierung umfasst die Dosierkammer der erfindungsgemäßen Kraftfutter-Dosiervorrichtung vorteilhaft zwei teleskopierbare Hülsen sowie zugeordnete Einstellmittel, mittels welchen durch Ineinander- bzw. Auseinanderschieben der Hülsen das Dosiervolumen auf einfache Weise einstellbar ist.

In einer anderen, konstruktiv sehr einfachen Ausgestaltung umfasst die Abgabevorrichtung einen durch ein Teilvolumen des Kraftfutterbehälters hindurch verschiebbaren Presskolben. Hierbei verschiebt der Presskolben, anhand einer durch das Betätigungsmittel vermittelten Schubbewegung, Kraftfutter zu einem Auslauf hin, so dass eine dosierte Menge Kraftfutter abgegeben wird. Der Presskolben ist hierbei vorzugsweise in Richtung entgegengesetzt zur Schwerkraft verschiebbar und vorzugsweise durch sein Eigengewicht rückstellbar.

Das Betätigungsmittel ist vorzugsweise unterhalb der Kraftfutter-Dosiervorrichtung am Schieber angebracht so dass durch Bewegung des Schiebers, je nach verwendeter Dosiervorrichtung, die Dosierkammer in den Kraftfutterbehälter verschoben und anschließend wieder freigegeben werden kann bzw. der Presskolben, vorzugsweise in Richtung entgegengesetzt zur Schwerkraft, durch das Teilvolumen des Kraftfutterbehälters hindurch verschoben und anschließend wieder freigegeben werden kann. Hierdurch lässt sich in besonders einfacher Weise eine dosierte Menge Kraftfutter rein mechanisch abgeben.

In einer vorteilhaften Ausgestaltung umfasst das System einen am Schieber angebrachten Kraftfuttertrog zur Aufnahme einer von der Abgabevorrichtung abgegebenen dosierten Menge Kraftfutter. Vorzugsweise ist der Kraftfuttertrog zugleich als Bestandteil des Betätigungsmittels ausgebildet. Hierdurch dient das Betätigungsmittel zugleich der Aufnahme des Kraftfutters. Vorzugsweise ist der Kraftfuttertrog schwenkbar am oberen Endbereich des Schiebers angebracht und dem Kraftfuttertrog ein Anschlag zugeordnet. Dies ermöglicht den Kraftfuttertrog, durch Bewegung des Schiebers, in eine Entleerstellung zu schwenken, welche vorteilhaft zugleich die Grundstellung des Trogs bei geschlossenem Schieber bildet. Die Möglichkeit den Kraftfuttertrog zu leeren hat insbesondere den Vorteil, dass dieser nicht dauerhaft durch Koten vom Nutztier verschmutzt werden kann. Weiterhin ist der Trog in dieser Entleerstellung vorzugsweise so angeordnet bzw. orientiert, dass er keine Auffangfläche bietet, d.h. so dass er keinen nachträglich einfallenden Schmutz, bspw. durch Koten, auffangen kann.

In einer bevorzugten Ausgestaltung ist die Fressöffnung mit mindestens zwei Gitterstäben zur Bildung eines Fressgitters versehen, durch welche zugleich der Anschlag zum Schwenken des Kraftfuttertrogs in die Entleerstellung gebildet wird. Die Gitterstäbe können in einer weiteren Ausgestaltung zugleich als Führung des Schiebers genutzt werden, es alternativ kann aber auch eine Führung bekannter Bauart für den Schieber vorgesehen werden.

Weiterhin kann das Betätigungsmittel am Schieber eine Auflage aufweisen, auf welcher der schwenkbare Kraftfuttertrog in einer Betätigungsstellung aufliegen kann, so dass er zur Betätigung der Abgabevorrichtung und zur Aufnahme der dosierten Menge Kraftfutter positioniert ist. Außerdem kann eine mit dem schwenkbaren Kraftfuttertrog zusammenwirkende Führung vorgesehen sein, welche, durch Bewegung des Schiebers, den Kraftfuttertrog in eine Fütterstellung bringt, in welcher der Kraftfuttertrog dem Nutztier zugänglich ist.

Es liegt im Rahmen der Erfindung, eine bestehende Raufutter-Dosiervorrichtung, bzw. einen bestehenden Raufutterautomat, ausgestattet mit einem Schieber zum öffnen bzw. schließen einer Fressöffnung, anhand einer vorzugsweise passiven Kraftfutter-Dosiervorrichtung nachzurüsten und somit zum Gegenstand der hierin beanspruchten Erfindung zu gelangen. Hierbei ist die Nachrüstung so auszugestalten, dass die Kraftfutter-Dosiervorrichtung mit einem Betätigungsmittel am Schieber der Raufutter-Dosiervorrichtung zur dosierten Abgabe von Kraftfutter mit einer Abgabevorrichtung der Kraftfutter-Dosiervorrichtung mechanisch zusammenwirkt. Das Betätigungsmittel kann nötigenfalls im Zuge der Nachrüstung vorgesehen werden, es kann aber auch im Rahmen der Erfindung ein Bestandteil des bestehenden Schiebers als Betätigungsmittel genutzt werden. Hieraus folgt, dass die hierin vorgeschlagenen Ausgestaltungen einer passiven Kraftfutter-Dosiervorrichtung an und für sich als erfinderisch zu betrachten sind. Diese können folglich, unbeschadet der Tatsache dass sie in den Patentansprüchen der vorliegenden Anmeldung in Verbindung mit einer Raufutter-Dosiervorrichtung beansprucht werden, ohne weiteres als Kraftfutter-Dosiervorrichtung an sich und für sich genommen zum Gegenstand eines unabhängigen Patentanspruchs werden bspw. im Wege einer Teilanmeldung.

### Kurze Beschreibung der Figuren

Im Folgenden wird nun bevorzugte Ausgestaltungen der Erfindung anhand der beiliegenden Figuren beschrieben. Aus dieser Beschreibung gehen weitere Vorteile und Einzelheiten der Erfindung hervor. Die Figuren zeigen zur Illustration der Erfindung:
FIG.1A-D: einen Schnitt in Seitenansicht eines erfindungsgemäßen automatischen Fütterungssystems, wobei verschiedene Betriebstellungen in Sequenz A-D abgebildet sind;
FIG.2A-D: eine Frontansicht des erfindungsgemäßen automatischen Fütterungssystems, wobei verschiedene Betriebstellungen in Sequenz A-D abgebildet sind;
FIG.3A-B: einen vergrößerten Längsschnitt einer passiven Dosiervorrichtung wie in Fig.1A bzw. FIG.1C gezeigt;
FIG.4A-C: einen vergrößerten Längsschnitt eines weiteren Ausführungsbeispiels einer passiven Dosiervorrichtung zur Verwendung in einem automatischen Fütterungssystem gemäss FIG.1A-FIG.2D.

Der Übersichtlichkeit halber sind Bezugszeichen bereits bezeichneter, identischer Elemente in den Figuren nicht unnötig wiederholt.

### Beschreibung bevorzugter Ausgestaltungen der Erfindung

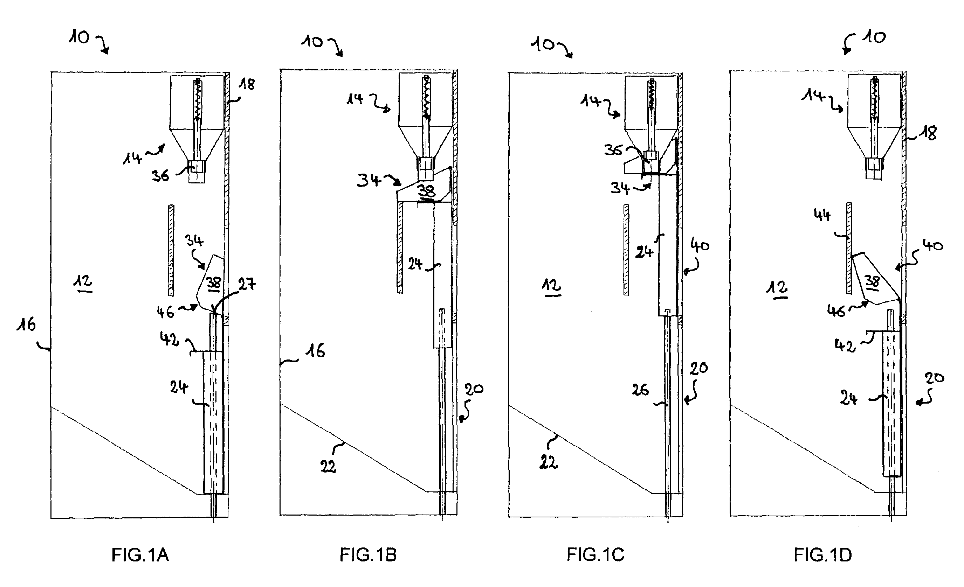

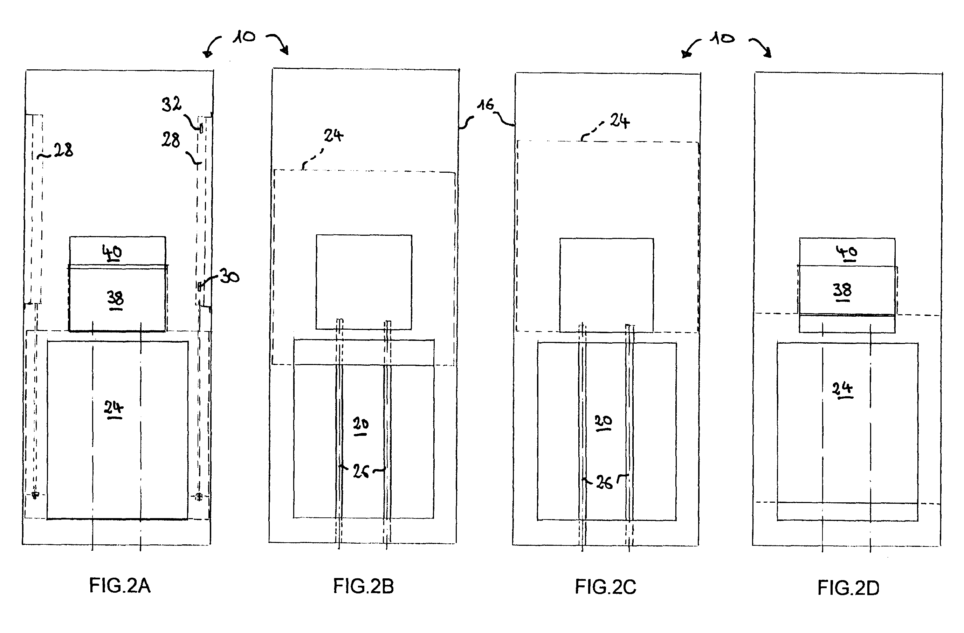

In FIG.1A-D und FIG.2A-D ist ein automatisches Fütterungssystem, welches insbesondere zur Pferdefütterung geeignet ist, allgemein mit 10 bezeichnet. Das Fütterungssystem 10 umfasst als Hauptkomponenten eine Raufutter-Dosiervorrichtung, allgemein mit 12 bezeichnet, sowie eine Kraftfutter-Dosiervorrichtung, allgemein mit 14 bezeichnet. Zur vereinfachten Befüllung, zum Schutz vor Beschädigung aber auch zum vereinfachten Verwirklichen des Erfindungsgedankens ist die Kraftfutter-Dosiervorrichtung 14 innerhalb der Raufutter-Dosiervorrichtung 12 angeordnet.

Die Raufutter-Dosiervorrichtung 12 umfasst einen kastenförmigen, verhältnismäßig großen Raufutterbehälter 16 zur Aufbewahrung von Raufutter, im allgemeinen mit rechteckigem oder quadratischem Grundmaß von beispielsweise 80x80cm und einer Höhe von beispielsweise 2m. Die Vorderwand 18 des Raufutterbehälters 16 ist im unteren Bereich mit einer ersten Fressöffnung 20 für Raufutter versehen. Hinter der Fressöffnung 20 ist eine schräge Bodenplatte 22 vorgesehen, durch welche das Raufutter (nicht gezeigt) zur Fressöffnung 20 gleitet. Zum Nachfüllen ist der Raufutterbehälter 16 am oberen Ende offen oder in der Rückwand mit einer Öffnung oder Klappe (nicht gezeigt) versehen.

Zum Öffnen bzw. Schließen der Fressöffnung 20 für Raufutter umfasst die Raufutter-Dosiervorrichtung 12 weiterhin einen vertikal verschiebbar gelagerten Schieber 24, welcher in geringem Abstand hinter der Vorderwand 18 angeordnet ist. Die in Frontansicht lediglich in FIG.2B und FIG.2C gezeigten zwei Gitterstäbe 26 bilden ein Fressgitter und dienen zugleich auch als Gleitschienen der vertikalen und horizontalen Führung des Schiebers 24, wie aus FIG.1A&B und FIG.2B&C näher ersichtlich. Der Schieber 24 ist mit entsprechenden nicht näher gezeigten Buchsen versehen in welche die Gitterstäbe eingreifen. Alternativ kann auch eine andere Führung bekannter Bauart für den Schieber vorgesehen werden. Zur Betätigung des Schiebers 24 sind geeignete Antriebsmittel vorgesehen, wie beispielsweise pneumatische Hubzylinder 28 (lediglich in FIG.2A schematisch gezeigt). Pneumatischen Hubzylinder 28 sind für die vorliegende Anwendung besonders geeignet und vermeiden z.B. elektrische Leitungen auf Netzspannung in Pferdeboxen, andere Antriebsmittel sind jedoch ebenso denkbar. Zur baulichen Vereinfachung sind die Kolbenstangen der Hubzylinder 28 nach unten gerichtet und greifen am unteren Endbereich des Schiebers 24 an, wie in FIG2A gezeigt. Weiterhin in FIG.2A gezeigt, sind zur Überwachung der Bewegung des Schiebers 24 mindestens ein unterer Positionssensor 30 und ein oberer Positionssensor 32 vorgesehen. Die Positionssensoren 30, 32, können in Form von induktiven Pneumatik-Standardkomponenten ausgeführt und an einem der beiden Hubzylinder 28 angeordnet sein. Die Positionssensoren 30, 32, können auch anders ausgeführt sein z.B. als zweckmäßig angeordnete Lichtschranken, und dienen insbesondere zur Steuerung der Kraftfutterdosierung.

Wie am besten aus FIG.1A-D ersichtlich ist, am oberen Ende des Schiebers 24 ein Betätigungsmittel 34 angeordnet welches zur dosierten Abgabe von Kraftfutter mit einer Abgabevorrichtung der Kraftfutter-Dosiervorrichtung 14 zusammenwirkt. Das Betätigungsmittel umfasst einen Kraftfuttertrog 38 und ein Drehgelenk mittels welcher der Kraftfuttertrog 38 um eine horizontale Achse mittig und schwenkbar am oberen Ende des Schiebers 24 befestigt ist. Um Zugang zum Kraftfuttertrog 38 zu gewähren, ist in der Vorderwand 18 eine zweite Fressöffnung 40 für Kraftfutter mittig oberhalb der Fressöffnung 20 für Raufutter vorgesehen.

Um den schwenkbaren Kraftfuttertrog 38 in verschiedene Kippstellungen gemäss FIG.1A, FIG.1B&C und FIG.1D zu bringen, sind folgende Mittel vorgesehen:
- am oberen Ende des Schiebers 24 ist eine Auflage 42, auf welcher der Kraftfuttertrog 38 in einer Betätigungsstellung (FIG.1B&C) zur Betätigung der Abgabevorrichtung und zur Aufnahme einer dosierten Menge Kraftfutter aufliegt;
- eine Führungsplatte 44 ist parallel zur Vorderwand 18 so im Raufutterbehälter 16 befestigt, dass sie den Kraftfuttertrog 38 in eine Fütterstellung (FIG.1D) bringt, in welcher der Kraftfuttertrog 38 dem Nutztier durch die zweite Fressöffnung 40 zugänglich ist;
- der Kraftfuttertrog 38 ist an seiner dem Schieber zugewandten Unterseite 46 abgerundet bzw. abgeschrägt und die Gitterstäbe 26 sind so bemessen, dass deren oberes Ende als Anschlag 27 für die abgerundete bzw. abgeschrägte Unterseite des Kraftfuttertrogs 38 dient, so dass der Kraftfuttertrog 38 unter Abwälzen der Unterseite 46 an den Gitterstäbe 26 in eine Entleerstellung (FIG.1A) geschwenkt wird.

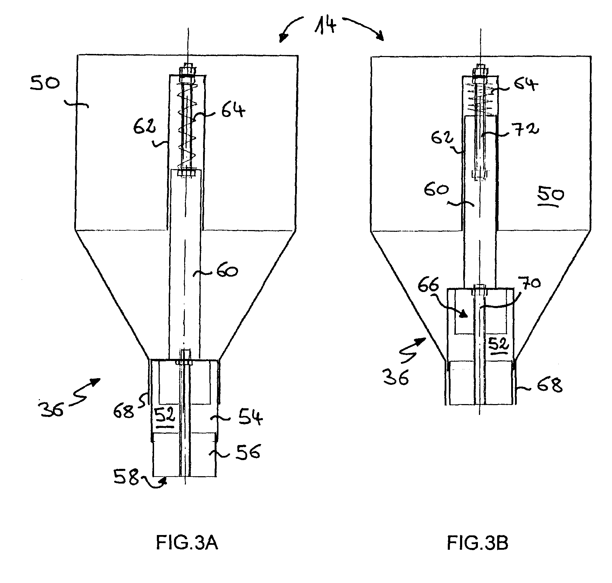

Anhand der FIG.3A&B wird nun die erfindungsgemäße Kraftfutter-Dosiervorrichtung 14 näher beschrieben. Diese umfasst einen Kraftfutterbehälter 50, welcher im Vergleich zum Raufutterbehälter 16 klein ist, sowie eine Abgabevorrichtung 36. Der Mantel des Behälters 50 ist im oberen Bereich zylindrisch und im unteren Bereich konisch ausgeführt, so dass das Kraftfutter (nicht gezeigt) der Abgabevorrichtung 36 durch Schwerkraft zugeführt wird. Die Abgabevorrichtung 36 umfasst eine Dosierkammer 52, welche von zwei teleskopierbaren Hülsen 54, 56 gebildet wird. Die Dosierkammer 52 weist vorzugsweise eine nach unten gerichtete Auslauföffnung 58 auf, aus welcher das dosierte Kraftfutter (nicht gezeigt) auslaufen kann. Die Dosierkammer 52 ist anhand eines Schafts 60 und einer Führung 62 gegen die Kraft einer Rückstellfeder 64 axial verschiebbar gelagert, so dass die Dosierkammer 52 in den Kraftfutterbehälter 50 eingeschoben werden kann und im Ruhezustand ausgeschoben ist. In der oberen Hülse 54 der Dosierkammer 52 sind eine oder mehrere Einlauföffnungen 66 vorgesehen. Die Einlauföffnungen 66 sind im Ruhezustand durch einen Rohrstutzen 68 am unteren Ende des Kraftfutterbehälters 50 verschlossen. Der Rohrstutzen 68 dient zugleich als Führung für die Dosierkammer 52. Im eingeschobenen Zustand füllt sich die Dosierkammer 52 unter Schwerkraft durch die Einlauföffnungen 66 mit Kraftfutter. Da der Kraftfuttertrog 38 bündig die untere Auslauföffnung 58 verschließt, wird ein, dem Innenvolumen der Dosierkammer 52, entsprechendes Volumen Kraftfutter dosiert, welches im ausgeschobenen Zustand der Dosierkammer 52 auf den Kraftfuttertrog 38 abgegeben wird. Das durch die beiden Hülsen 54, 56 umschlossene Innenvolumen der Dosierkammer 52 kann durch Ineinander- bzw. Auseinanderschieben der Hülsen 54, 56 anhand einer Stellschraube 70 fest eingestellt werden, so dass das Dosiermaß angepasst werden kann. Ferner lässt sich über eine weitere Stellschraube 72 die Federvorspannung der Rückstellfeder 64 einstellen.

Die Kraftfutter-Dosiervorrichtung 14 ermöglicht es in einfacher, passiver Bauweise bei jeder wiederholten und gleichen mechanischen Betätigung das eingestellte zu Volumen dosieren. Die Kraftfutter-Dosiervorrichtung 14 an sich benötigt daher keinen eigenen Antrieb und keine zugehörige Energieversorgung bzw. Steuerung. Zum Befüllen der Kraftfutter-Dosiervorrichtung 14 kann der Kraftfutterbehälter 50 oben offen oder mit einer Klappe versehen sein.

Im folgenden wird die Funktionsweise des erfindungsgemäßen Automatischen Fütterungssystems 10 anhand der in FIG.1A-D&2A-D gezeigten Betriebszustände näher erläutert.

FIG.1A&2A zeigen das Fütterungssystem 10 im Ruhezustand. Im Ruhezustand findet keine Fütterung statt. Die Klappe 24 befindet sich in Schließstellung, d.h. sie verschließt die Raufutter-Fressöffnung 20 und der schwenkbare Kraftfuttertrog 38 ist in seiner Grundstellung, d.h. einer im wesentlichen vertikalen Entleerungsstellung hinter der Kraftfutter-Fressöffnung 40 und enthält daher kein Futter. In der Entleerungsstellung ist der Kraftfuttertrog 38 somit so orientiert, dass er keine Auffangfläche für einfallenden Schmutz bietet und somit auch nicht durch Koten verschmutzt werden kann. Zum Ruhezustand ist weiter anzumerken, dass Kraftfuttertrog 38 und Führungsplatte 44 auch einen ungewollten Zugang zum Raufutter durch die Kraftfutter-Fressöffnung 40 verhindern.

FIG.1B&2B zeigen das Fütterungssystem 10 in einem ersten Fütterungszustand. Im ersten Fütterungszustand wird Raufutter gefüttert. Dieser Zustand wird dadurch erreicht dass die Hubzylinder 28 den Schieber 24 in seine Offenstellung gemäss FIG.1B&2B fahren. Anhand des oberen Positionssensors 32 kann die Steuerung feststellen, dass der Schieber die Stellung gemäss FIG.1B&2B erreicht hat, d.h. dass sich das Fütterungssystem 10 im ersten Fütterungszustand befindet. Das Raufutter ist durch das Fressgitter, d.h. die erste Fressöffnung 20 für das Nutztier zugänglich. Wie aus FIG.1B ersichtlich ist der Kraftfuttertrog 38 durch die Bewegung des Schiebers 24, über die in FIG.1D gezeigte Stellung hinaus, in eine im wesentlichen horizontale Betätigungsstellung geklappt, in welcher der Kraftfuttertrog 38 mit einer Wand auf der Auflage 42 anliegt. Die zweite Fressöffnung 40 ist durch den Schieber 24 verschlossen. Durch die Einstellung der Verweilzeit des Fütterungssystems 10 im ersten Fütterungszustand wird das Raufutter dosiert.

FIG.1C&2C zeigen das Fütterungssystem 10 in einem Zwischenzustand, in welchem die Abgabevorrichtung 36 zur Kraftfutter-Dosierung betätigt wird. Genauer gesagt, wird die an der Auflage 42 gestützte Wand des Kraftfuttertroges 38 nach oben gefahren durch zusätzliche Bewegung des Schiebers 24 anhand der Hubzylinder 28 über die Offenstellung in FIG.1B&2B hinaus. Durch den angehobenen Kraftfuttertrog 38 wird die Dosierkammer 52 in den Kraftfutterbehälter 50 verschoben. In diesem Zwischenzustand ist die erste Fressöffnung 20 für Raufutter noch geöffnet und die zweite Fressöffnung 40 für Kraftfutter noch verschlossen. Der Zwischenzustand wird anhand einer Steuerung zumindest so lange beibehalten, dass sich die Dosierkammer 52 auch bei maximalem Dosiervolumen und sehr grobkörnigem Kraftfutter vollständig füllen kann. Der Zwischenzustand gemäss FIG.1C&2C ist optional. Wenn kein Kraftfutter verfüttert werden soll, kann dieser Zwischenzustand von der Steuerung ohne weiteres übersprungen werden dadurch, dass der Schieber 24 aus der Offenstellung gemäss FIG.1B&2B (erster Fütterungszustand) direkt zurück in die Schließstellung gemäss FIG.1A&2A (Ruhezustand) gefahren wird. Andererseits ist, je nach Dosiervolumen und Kraftfutterbedarf, durch wiederholtes Verschieben des Kraftfuttertroges 38 zwischen den Zuständen gemäss FIG.1B&2B und gemäss F1G.1C&2C auch eine wiederholte Kraftfutterabgabe in den Kraftfuttertrog 38 möglich. Auf diese Art können auch größere Mengen an Kraftfutter in mehreren Dosen in den Kraftfuttertrog 38 abgegeben und in einem Fütterungsvorgang verfüttert werden.

FIG.1D&2D zeigen das Fütterungssystem in einem zweiten Fütterungszustand. In diesem zweiten Fütterungszustand, welcher an den Zwischenzustand nach F1G.1C&2C anschließt, wird Kraftfutter gefüttert. Der Zustand gemäss FIG.1D&2D wird dadurch erreicht, dass die Hubzylinder 28 den Schieber 24 in eine in FIG.1D&2D gezeigte Zwischenstellung leicht oberhalb der Schließstellung im Ruhezustand fahren. Das Erreichen dieser Stellung wird anhand des unteren Positionssensors 30 bestimmt. Diese Stellung ist so gewählt, dass der Kraftfuttertrog 38 anhand der Führungsplatte 44 in die schräge Fütterstellung gemäss FIG.1D geschwenkt und gehalten wird und noch nicht an den Gitterstäben 26 anschlägt. In dieser Stellung ist das beim Hinabfahren dosiert in den Kraftfuttertrog abgegebene Kraftfutter dem Nutztier durch die zweite Fressöffnung 40 zugänglich. Das Raufutter ist jedoch nicht mehr zugänglich, da die erste Fressöffnung 20 größtenteils vom Schieber 24 verschlossen ist. Die Verweilzeit im zweiten Fütterungszustand ist der Aufnahme des Kraftfutters angepasst.

Zum Abschließen eines Fütterungs-Zyklus wird der Schieber 24 entweder sofort aus der Offenstellung gemäss FIG.1B&2B (d.h. wenn kein Kraftfutter abgegeben werden soll) oder aus der Zwischenstellung in FIG.1D&2D (d.h. nach Vergabe von Kraftfutter) wieder vollständig nach unten in die Schließstellung in FIG.1A&2A gefahren. Hierbei wird der Kraftfuttertrog 38 durch den Anschlag 27 an den Gitterstäben 26 in seine ebenfalls in FIG.1A&2A gezeigte Entleerungsstellung verschwenkt, wodurch überschüssiges Kraftfutter ausgeworfen, d.h. der Kraftfuttertrog 38 gereinigt wird und insbesondere verhindert wird, dass das Nutztier durch Koten den Kraftfuttertrog 38 dauerhaft verschmutzen kann.

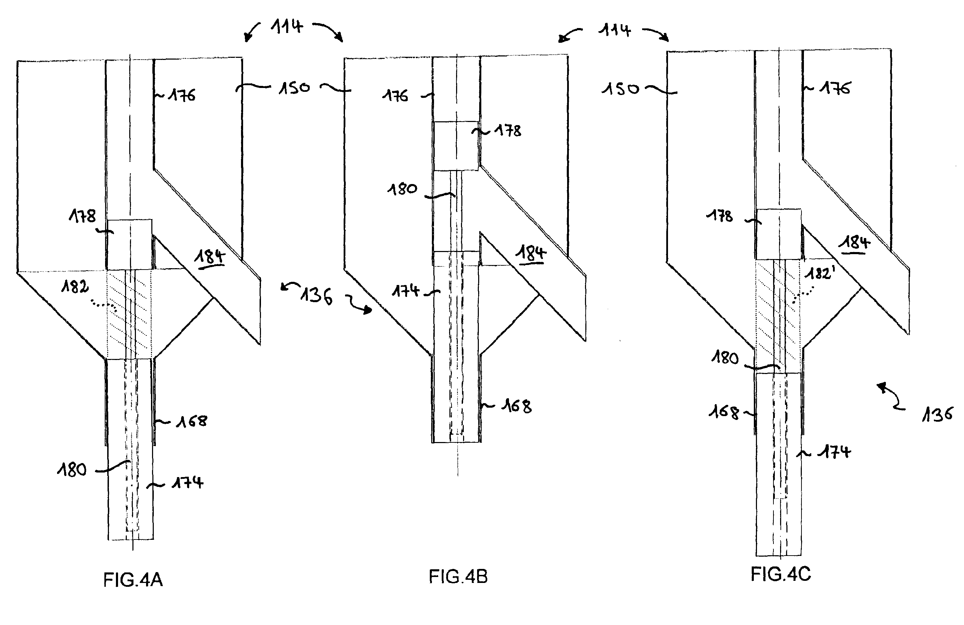

FIG.4A-C zeigen verschiedene Betriebszustände einer alternativen Ausgestaltung einer passiven Kraftfutter-Dosiervorrichtung 114. Die Kraftfutter-Dosiervorrichtung 114 gemäss FIG.4A-C umfasst einen Kraftfutterbehälter 150 von ähnlicher Ausgestaltung wie der Behälter 50, d.h. der Behälter 150 hat einen zylindrisch geformten Oberteil an den ein konisch geformter Unterteil anschließt. Die Dosiervorrichtung 114 ist jedoch mit einer andersartigen Abgabevorrichtung 136 versehen als die weiter oben beschriebene Dosiervorrichtung 14. Die Abgabevorrichtung 136 ist im wesentlichen im unteren Bereich des Behälters 150 angeordnet und wird untenstehend näher erläutert.

Aus dem Unterteil des Behälters 150 mündet ein Rohrstutzen 168. Der Rohrstutzen 168 bildet eine Führung für einen Presskolben 174. Der Presskolben 174 ist durch den Rohrstutzen 168, bspw. in oder gegen Schwerkraftrichtung wie in FIG.4A-C, axial und durch einen unteren Bereich des Behälters 150 hindurch verschiebbar gelagert. Der Presskolben 174 ist, bis auf eine Öffnung für einen Schaft 180, nach oben hin geschlossen und umfasst über seine gesamte Länge einen geschlossenen zylindrischen Außenmantel. Im Oberteil des Behälters 150 ist ein Leitrohr 176 mittig und koaxial angeordnet. Ein Anschlagkolben 178 ist koaxial zum Presskolben 174 und verschiebbar im Leitrohr 176 aufgenommen. Der Anschlagkolben 178 ist über den Schaft 180, bspw. eine Gewindestange, starr mit dem Presskolben 174 verbunden. Der Schaft 180 ist im Vergleich zum Presskolben 174 dünn, d.h. hat einen wesentlich geringeren Durchmesser. Der Anschlagkolben 178 ist durch nicht näher gezeigte Anschlagmittel, bspw. mittels eines senkrechten Langlochs im Mantel des Leitrohrs 176 und eines hierin geführten, am Anschlagkolben 178 befestigten Stifts oder mittels einer Bördelung am unteren Ende des Leitrohrs 176, in Richtung nach unten nur bis zu einer unteren Endstellung verschiebbar, wie in FIG.4A gezeigt. In Richtung nach oben ist der Anschlagkolben 178 über die in FIG.4B gezeigte Stellung hinaus verstellbar, z.B. bis an das obere Ende des Leitrohrs 176. Durch starre Verbindung zwischen Anschlagkolben 178 und Presskolben 174 mittels des Schafts 180 ist der Presskolben 174 am Behälter 150 gehalten. Die Distanz zwischen Presskolben 174 und Anschlagkolben 178 ist einstellbar, dadurch dass der Schaft 180 in axialer Richtung einstellbar am Presskolben 174 befestigt ist, z.B. mittels Schraub- oder Rastverbindung. Der Anschlagkolben 178 dient nicht nur als Anschlag sondern auch zur verbesserten Führung des Presskolbens 174 und ggf. als Zusatzgewicht, das dazu beiträgt den durch Eigengewicht rückstellenden Presskolben 174 nach Betätigung (siehe weiter unten) durch Schwerkraft wieder in seine untere Endstellung zu bringen. Der Außendurchmesser von Anschlagkolben 178 und Presskolben 174 und der Innendurchmesser des Leitrohrs 176 sind so abgestimmt, dass geführtes aber leichtgängiges Gleiten der beiden Kolben 174, 178 innerhalb des Leitrohrs 176 ermöglicht wird.

Die Wirkweise der Abgabevorrichtung 136, die in wesentlichen Punkten derjenigen einer Hubkolbenpumpe entspricht, wird im folgenden anhand der FIG.4A-C erläutert. FIG.4A zeigt anhand punktierter Schraffur ein erstes eingestelltes Kraftfuttervolumen 182 welches sich im unteren Teil des Behälters 150 oberhalb des Presskolbens 174 befindet. Das Kraftfuttervolumen 182 entspricht in etwa einem Zylindervolumen mit dem Durchmesser des Presskolbens 174 und einer Höhe gleich dem einstellbaren Abstand zwischen Presskolben 174 und Anschlagkolben 178, wobei das durchquerende Volumen des Schafts 180 abzurechnen ist. Zur dosierten Abgabe von Kraftfutter wird der Presskolben 174 nun mittels Schubbewegung anhand des Betätigungsmittels 34 am Schieber 24 entgegengesetzt zur Schwerkraft, durch das Teilvolumen des Behälters 150 in dem sich das Kraftfuttervolumen 182 ursprünglich befand hindurch, nach oben in das Leitrohr 176 hineingeschoben. Hierdurch verdrängt der Presskolben 174 gleichzeitig das gesamte Kraftfuttervolumen 182 aus dem Behälter 150 in das Leitrohr 176 hinein. Die entsprechend anschließende, obere Betriebsstellung des Presskolbens 174 ist in FIG.4B gezeigt und wird erreicht wenn das Betätigungsmittel 34 am unteren Ende des Rohrstutzens 168 anliegt. In etwa das gesamte, voreingestellte Kraftfuttervolumen 182, welches durch den Presskolben 174 in das Leitrohr 176 verschoben wurde, über einen Auslauf 184 abgegeben, wobei der Auslauf 184 an den unteren Bereich des Leitrohrs 176 anschließt und schräg nach unten gerichtet ist, so dass Kraftfutter schwerkraftbedingt aus dem Leitrohr 176 ausfließt. Somit ermöglicht die Abgabevorrichtung 136 eine dosierte Abgabe von Kraftfutter. Die Dosierung kann eingestellt werden indem der Abstand zwischen Presskolben 174 und Anschlagkolben 178 mittels der einstellbaren Befestigung des Schafts 180 am Presskolben 174 verändert wird. So lässt sich zum Beispiel im Vergleich zu FIG.4B bei erhöhtem Abstand ein größeres Kraftfuttervolumen 182' einstellen, wie mittels punktierter Schraffur in FIG.4C gezeigt. Obwohl nicht gezeigt, kann die Gesamtlänge des Presskolbens 174 so gewählt sein, dass dieser in vollständig eingeschobenem Zustand in etwa vom unteren Ende des Rohrstutzens 168 bis zur Mündungshöhe des Auslaufs 184 im Leitrohr 176 reicht. Ferner kann das untere Ende des Leitrohrs 176 nach unten aufweitend gestaltet sein, um die Einführung des Kraftfutters zu erleichtern. Man wird beachten, dass die Dosiervorrichtung 114, ebenso wie die Dosiervorrichtung 14, nicht nur einstellbar sondern auch vollkommen passiv ausgestaltet ist und zum mechanischen Zusammenwirken mit einem Betätigungsmittel 34 am Schieber 24 der Raufutter-Dosiervorrichtung 10 geeignet ist. Selbstredend trifft die Beschreibung des automatischen Fütterungssystems 10 anhand der FIG.1A-D und FIG.2A-D entsprechend ebenfalls zu, wenn anstelle einer Dosiervorrichtung 14 gemäss FIG.3A-B, eine Dosiervorrichtung 114 gemäss FIG.4A-C im Fütterungssystem 10 verwendet wird. Rein beispielhaft sei angegeben, dass in einer konkreten Ausführung beider Dosiervorrichtungen 14; 114 das Gesamtvolumen des Behälters 50; 150 jeweils ca. 401 beträgt wobei das Dosiervolumen des Kraftfutters z.B. zwischen 0,3 und 0,61 eingestellt werden kann.

Abschließend werden noch einige alternative bzw. zusätzliche Gestaltungsmöglichkeiten im Rahmen der Erfindung kurz umrissen.

Um die Fütterung verschiedener Kraftfuttertypen oder Futterzusätze zu ermöglichen, können im Fütterungssystem mehrere Dosiervorrichtungen 14 oder 114 gemäss FIG.3A&B bzw. FIG.4A-C parallel, außermittig angeordnet werden, gegebenenfalls mit entsprechenden separaten Trögen. Jede der Kraftfutter-Dosiervorrichtungen gemäss FIG.3A&B bzw. der FIG.4A-C wird als bevorzugte, an und für sich bereits erfinderische Ausgestaltung angesehen. Diese könnten jedoch ohne Verlust der Vorteile der beanspruchten Erfindung auch durch andere passive rein mechanisch betätigbare Dosiervorrichtungen ersetzt werden. Ein am Schieber 24 schwenkbar angebrachter Kraftfuttertrog 38 ist insbesondere wegen der Entleerungsmöglichkeit und der damit verbundenen Hygiene bevorzugt. Es kann jedoch in einer alternativen Ausgestaltung auch ein bzgl. des Raufutterbehälters 16 innen oder außen, feststehend angebrachter Trog für das Kraftfutter verwendet werden. Ein außenliegender Kraftfuttertrog kann über eine Futterrutsche mit Kraftfutter befüllt werden z.B. ausgehend vom Auslauf 184 einer Dosiervorrichtung 114 gemäss FIG.4A-C. In einer solchen Ausgestaltung lässt sich eine Dosiervorrichtung 114 gemäss FIG.4A-C oder gegebenenfalls eine anders gestaltete, antriebslose Kraftfutter-Dosiervorrichtung über ein vereinfachtes, nicht klappbares Betätigungsmittel am Schieber 24 betätigen, welches nicht zugleich als auch Aufnahme für das Kraftfutter dient. Bei Verwendung mehrerer erfindungsgemäßer Fütterungssysteme in einer Stallung können einzelne Kraftfutter-Dosierer 14; 114 ohne weiteres über ein Füllsystem, wie z.B. in der internationalen Patentanmeldung WO 95 10180 (zu Fig.7) beschreiben, automatisch befüllt werden. Ein Nachrüsten bestehender Raufutterautomaten mit einem Betätigungsmittel und einem hiermit mechanisch zusammenwirkenden Kraftfutter-Dosierer ist im Rahmen der Erfindung ebenfalls möglich und, insbesondere bei Verwendung eines feststehenden Kraftfuttertrogs, verhältnismäßig kostengünstig.

### Bezugszeichenliste

- 10:: automatisches Fütterungssystem
- 12:: Raufutter-Dosiervorrichtung
- 14; 114:: Kraftfutter-Dosiervorrichtung
- 16:: Raufutterbehälter
- 18:: Vorderwand
- 20:: Fressöffnung (für Raufutter)
- 22:: schräge Bodenplatte
- 24:: Schieber
- 26:: Gitterstäbe
- 27:: Anschlag
- 28:: pneumatische Hubzylinder
- 30, 32:: Positionssensoren
- 34:: Betätigungsmittel (für Kraftfutter- Dosiervorrichtung)
- 36; 136:: Abgabevorrichtung (der Kraftfutter-Dosiervorrichtung)
- 38:: Kraftfuttertrog
- 40:: Fressöffnung (für Kraftfutter)
- 42:: Auflage (für Kraftfuttertrog)
- 44:: Führungsplatte (für Kraftfuttertrog)
- 46:: Unterseite (des Kraftfuttertrogs)
- 50; 150:: Kraftfutterbehälter
- 52:: Dosierkammer
- 54, 56:: teleskopierbare Hülsen
- 58:: Auslauföffnung
- 60:: Schaft
- 62:: Führung
- 64:: Rückstellfeder
- 66:: Einlauföffnung(en)
- 68; 168:: Rohrstutzen
- 70:: Stellschraube (für Hülsen)
- 72:: Stellschraube (für Rückstellfeder)
- 174:: Presskolben
- 176:: Leitrohr
- 178:: Anschlagkolben
- 180:: Schaft
- 182; 182':: Kraftfuttervolumen
- 184:: Auslauf

## Patentansprüche

1. Automatisches Fütterungssystem (10) insbesondere für Pferde, umfassend
eine Raufutter-Dosiervorrichtung (12) mit einem Raufutterbehälter (16), welcher eine Fressöffnung (20) aufweist, und einem Schieber (24) zum öffnen bzw. schließen der Fressöffnung; und
eine Kraftfutter-Dosiervorrichtung (14; 114) mit einem Kraftfutterbehälter (50; 150) und einer Abgabevorrichtung (36; 136) zur dosierten Abgabe von Kraftfutter;
**dadurch gekennzeichnet, dass**
ein Betätigungsmittel (34) am Schieber (24) der Raufutter-Dosiervorrichtung vorgesehen ist, welches zur dosierten Abgabe von Kraftfutter mit der Abgabevorrichtung (36; 136) der Kraftfutter-Dosiervorrichtung mechanisch zusammenwirkt.

2. Automatisches Fütterungssystem nach Anspruch 1, wobei die Kraftfutter-Dosiervorrichtung (14; 114) eine passive Vorrichtung ist.

3. Automatisches Fütterungssystem nach Anspruch 2, wobei die Abgabevorrichtung (36) eine gegen eine Federkraft in den Kraftfutterbehälter (50) verschiebbare Dosierkammer (52) umfasst, welche mindestens eine Einlauföffnung (66) im oberen Bereich sowie mindestens eine Auslauföffnung (58) im unteren Bereich aufweist, wobei die Dosierkammer (52) im eingeschobenen Zustand durch die Einlauföffnung mit Kraftfutter befüllbar ist und im ausgeschobenen Zustand durch die Auslauföffnung entleerbar ist, so dass eine dosierte Menge Kraftfutter abgegeben wird.

4. Automatisches Fütterungssystem nach Anspruch 2, wobei die Abgabevorrichtung (136) einen, vorzugsweise in Richtung entgegengesetzt zur Schwerkraft, durch ein Teilvolumen des Kraftfutterbehälters (150) hindurch verschiebbaren Presskolben (174) umfasst, welcher durch Schubbewegung Kraftfutter zu einem Auslauf (184) hin verschiebt, so dass eine dosierte Menge Kraftfutter abgegeben wird.

5. Automatisches Fütterungssystem nach Anspruch 3 oder 4, wobei das Betätigungsmittel (34) unterhalb der Kraftfutter-Dosiervorrichtung (14; 114) am Schieber (24) angebracht ist und, durch Bewegung des Schiebers (24), die Dosierkammer (52) in den Kraftfutterbehälter (50) verschiebt und anschließend wieder freigibt bzw. den Presskolben (174), vorzugsweise in Richtung entgegengesetzt zur Schwerkraft, durch das Teilvolumen des Kraftfutterbehälters (150) hindurch verschiebt und anschließend wieder freigibt, so dass eine dosierte Menge Kraftfutter abgegeben wird.

6. Automatisches Fütterungssystem nach einem der Ansprüche 1 bis 5, umfassend einen am Schieber angebrachten Kraftfuttertrog (38) zur Aufnahme einer von der Abgabevorrichtung (36; 136) abgegebenen dosierten Menge Kraftfutter, wobei der Kraftfuttertrog (38) vorzugsweise zugleich einen Teil des Betätigungsmittels am Schieber (24) ausbildet.

7. Automatisches Fütterungssystem nach einem der Ansprüche 1 bis 6, wobei der Kraftfuttertrog (38) schwenkbar am oberen Endbereich des Schiebers (20) angebracht ist und dem Kraftfuttertrog (38) ein Anschlag zugeordnet ist, so dass der Kraftfuttertrog, durch Bewegung des Schiebers, in eine Entleerstellung schwenkbar ist und wobei der Kraftfuttertrog (38) vorzugsweise zugleich einen Teil des Betätigungsmittels am Schieber (24) ausbildet.

8. Automatisches Fütterungssystem nach Anspruch 7, wobei die Fressöffnung mit mindestens zwei Gitterstäben (26) zur Bildung eines Fressgitters versehen ist, durch welche der Anschlag (27) zum Schwenken des Kraftfuttertrogs in die Entleerstellung gebildet wird.

9. Automatisches Fütterungssystem nach Anspruch 6, 7 oder 8, wobei das Betätigungsmittel (34) den der Kraftfuttertrog (38) umfasst und am Schieber eine Auflage (42) aufweist, auf welcher der schwenkbare Kraftfuttertrog (38) in einer Betätigungsstellung zur Betätigung der Abgabevorrichtung (36; 136) und zur Aufnahme der dosierten Menge Kraftfutter aufliegt.

10. Automatisches Fütterungssystem nach Anspruch 9, weiterhin umfassend eine mit dem schwenkbaren Kraftfuttertrog zusammenwirkende Führung (44), welche, durch Bewegung des Schiebers, den Kraftfuttertrog in eine Fütterstellung bringt, in welcher der Kraftfuttertrog dem Nutztier zugänglich ist.

11. Automatisches Fütterungssystem nach Anspruch 3, wobei die Dosierkammer zwei teleskopierbare Hülsen (52, 54) sowie zugeordnete Einstellmittel (70) umfasst, mittels welchen durch Ineinander- bzw. Auseinanderschieben der Hülsen das Dosiervolumen einstellbar ist.
